# EUROPÄISCHE PATENTANMELDUNG

(11) **EP 3 705 751 A1**
(43) Veröffentlichungstag der Anmeldung: **09.09.2020**
(21) Anmeldenummer: 19161101.1
(22) Anmeldetag: 06.03.2019
(51) Int. Cl.: F16H 37/04

(54) **LASTSCHALTGETRIEBE FÜR LANDMASCHINEN**

(71) Anmelder: Deere & Company, Moline, IL 61265 (US)
(72) Erfinder: Müller, David, 68163 Mannheim (DE); Gugel, Dr. Rainer, 68163 Mannheim (DE); Buhrke, Frank, 68163 Mannheim (DE); Schumann, Michael, 68163 Mannheim (DE)
(74) Vertreter: Lavall, Christian Henner

(57) **Zusammenfassung**

Die Erfindung betrifft ein Lastschaltgetriebe für eine Landmaschine mit einem Getriebegehäuse, einer Eingangswelle und einer Ausgangswelle, wobei sich die Eingangs- und die Ausgangswelle zumindest abschnittsweise innerhalb des Gehäuses erstrecken, wobei eine Nebenwelleneinheit parallel versetzt zwischen der Eingangs- und der Ausgangswelle angeordnet ist, wobei die Eingangswelle und die Nebenwelleneinheit über eine Vorschaltgruppe und die Nebenwelleneinheit und die Ausgangswelle über eine Nachschaltgruppe miteinander in Verbindung stehen.

## Beschreibung

Die vorliegende Erfindung betrifft ein Lastschaltgetriebe für Landmaschinen.

Bei Lastschaltgetrieben handelt es sich um eine spezielle Form von Fahrzeuggetrieben, bei denen die Übersetzung unter Last, also während der Fahrt, ohne Unterbrechung des Drehmoments geändert werden kann. Dadurch können auch während des Schaltvorgangs Vortriebskräfte übertragen werden, sodass das Fahrzeug auch während des Schaltvorgangs weiter beschleunigen kann. Somit ergeben sich beim Schaltvorgang keine Komforteinbußen. Bei landwirtschaftlichen Nutzfahrzeugen, insbesondere bei Traktoren, werden vorwiegend Lastschaltgetriebe eingesetzt, weil sie insbesondere bei der Arbeit in hügeligem Gelände und auf wechselnden Bodenarten eine schnellere Arbeit ermöglichen und helfen, Kraftstoff zu sparen. Manche Traktorgetriebe sind auch nur teillastschaltbar, das bedeutet, dass nur zwischen manchen Gängen ohne Zugkraftunterbrechung geschaltet werden kann, während andere (zum Beispiel Gruppenwechsel) mit einer Zugkraftunterbrechung verbunden sind.

Es ist bekannt, derartige Getriebe in Verbindung mit Planetengetrieben und Kupplungen in einem Baukastensystem auszubilden, sodass das Lastschaltgetriebe, durch entsprechende Ausbildung und Anordnung von Zahnradpaarungen des Planetengetriebes in verschiedenen Betriebsmodi, wie Durchtriebsmodus, Untersetzungsmodus und Reversiermodus betrieben werden kann. So werden an Traktoren Lastschaltgetriebe als Getriebevorstufe eingesetzt, die je nach Ausbildung eines Stufenplanetensatzes entweder in den Betriebsmodi Durchtriebsmodus bzw. Reversiermodus oder in den Betriebsmodi Durchtriebsmodus bzw. Untersetzungsmodus betrieben werden können.

Diese Getriebe zeichnen sich dadurch aus, dass in einer ersten Schaltung eine mit einer Eingangswelle verbundene Kupplung die Eingangswelle mit der Ausgangswelle verbindet, sodass das Getriebe im Durchtriebsmodus betrieben werden kann, wobei das Planetengetriebe freiläuft. In einer zweiten Schaltung wird die Kupplung gelöst, sodass der Planetenträger durch die Eingangswelle angetrieben wird und sich der Planetensatz um ein durch eine Bremse festgestelltes erstes Sonnenrad wälzt, durch welches sich die Ausgangswelle erstreckt. Der Abtrieb erfolgt über ein zweites mit der Ausgangswelle verbundenes Sonnenrad, welches von dem Planetensatz angetrieben wird. Je nach Zuordnung des Planetensatzes bzw. Ausbildung der Zahnradsätze von Planetensatz und Sonnenrädern kann das Lastschaltgetriebe im Untersetzungsmodus oder im Reversiermodus betrieben werden.

Somit wird ein zweistufiges Lastschaltgetriebe bereitgestellt, welches jedoch zum einen fertigungstechnisch aufwendig ausgebildet ist und zum anderen einen weiteren Betriebsmodus, beispielsweise ein Kriechgangmodus, in der genannten Anordnung nicht zulässt.

In der EP 0 745 198 B1 wird ein Lastschaltgetriebe für mobile Arbeitsmaschinen beschrieben, sowie ein Verfahren zur Steuerung dieses Lastschaltgetriebes. Dabei kommen Hydromotoren zum Einsatz, die über eine Kupplung miteinander verbunden sind. In einem unteren Geschwindigkeitsbereich werden die Hydromotoren drehmomentaddierend zusammengeschaltet. Einer der Hydromotoren wird über eine weitere Kupplung umgestaltet, sodass die Hydromotoren in einer oberen Geschwindigkeitsbereichsdrehzahl addierend betrieben werden können.

In der WO 2013/064371 A1 wird ein Lastschaltgetriebe mit einer Ausgangswelle und einer dazu koaxial angeordneten Ausgangswelle beschrieben. Das Lastschaltgetriebe weist einen Planetengetriebesatz auf. Das Planetengetriebe umfasst einen Planetenträger, der mit der Eingangswelle in Verbindung steht. Mit einem Schaltelement ist die erste Ausgangswelle mit der ausgangsseitigen Sonne eines Stufenplanetensatzes verbindbar. Mit einem zweiten Schaltelement ist die erste Ausgangswelle direkt mit der Eingangswelle verbindbar. Das eingangsseitige Sonnenrad des Stufenplanetensatzes ist drehfest mit einem Gehäuseteil des Lastschaltgetriebes verbunden.

Ausgehend von diesem Stand der Technik, liegt der Erfindung die Aufgabe zugrunde, ein Lastschaltgetriebe anzugeben, dass einerseits mit einer hohen Anzahl von Gangschaltvarianten bei zugleich kompakter Größe realisierbar ist und dass andererseits für einen breiten Einsatzbereich verwendbar ist.

Diese Aufgabe wird gelöst durch ein Lastschaltgetriebe gemäß Patentanspruch 1.

Erfindungsgemäß weist das Lastschaltgetriebe ein Getriebegehäuse, eine Eingangswelle und eine Ausgangswelle auf, wobei sich die Eingangs- und die Ausgangswelle zumindest abschnittsweise innerhalb des Getriebegehäuses erstrecken, wobei eine Nebenwelleneinheit parallel versetzt zwischen der Eingangs- und der Ausgangswelle innerhalb des Getriebegehäuses angeordnet ist, wobei die Eingangswelle und die Nebenwelleneinheit über eine Vorschaltgruppe und die Nebenwelleneinheit und die Ausgangswelle über eine Nachschaltgruppe miteinander in Verbindung stehen, wobei jede Schaltgruppe zumindest zwei einzeln hinzu- oder abkoppelbare Zahnradpaare aufweist, und wobei die Nebenwelleneinheit aus einer ersten und einer zweiten Nebenwelle gebildet ist, die über ein Vorgelege miteinander koppelbar sind.

Mit Zu- bzw. Abkoppeln der einzelnen Zahnradpaare ist im Rahmen dieser Erfindung gemeint, dass die Zahnradpaare entweder miteinander in Eingriff stehen und demnach ein Drehmoment von dem einen Zahnrad auf das andere Zahnrad des Zahnradpaares übertragen werden kann oder dass diese Zahnräder eines Zahnradpaares nicht miteinander in Eingriff stehen. Bei zwei miteinander in Eingriff stehenden Zahnrädern handelt es sich folglich um ein zugekoppeltes Zahnradpaar.

Über die Eingangswelle kann das Lastschaltgetriebe mit einer Antriebsmaschine z.B. einem Verbrennungsmotor verbunden werden, so dass das eingespeiste Drehmoment über das Lastschaltgetriebe auf die Ausgangswelle übertragen werden kann. An die Ausgangswelle kann dann eine Arbeitsmaschine oder eine Antriebswelle z.B. für Räder angeschlossen werden.

Insgesamt weist das Lastschaltgetriebe zwei Schaltgruppen, sowie ein Vorgelege auf. Bei einem Vorgelege handelt es sich um eine Erweiterung des Schaltgetriebes und setzt sich aus zwei Vorgelege-Zahnradpaaren zusammen. Diese Vorgelege-Zahnradpaare können in verschiedener Art und Weise miteinander in Verbindung stehen und realisieren zumindest in einem Schaltzustand entweder eine Untersetzung oder eine Übersetzung. Letztendlich können somit mit dem Vorgelege zwei Schaltzustände realisiert werden, wobei ein Schaltzustand für einen niedrigen und ein anderer Schaltzustand für einen hohen Lastzustand vorgesehen sind. Aus diesem Grunde werden die Schaltzustände des Vorgeleges in der Regel mit Hi für den hohen Lastzustand und mit Lo für den niedrigen Lastzustand bezeichnet.

Durch das Vorgelege sowie durch die Vorschalt- und die Nachschaltgruppe mit jeweils mindestens zwei Zahnradpaaren und entsprechend mindestens zwei Schaltzuständen lassen sich eine Vielzahl von einzelnen Gangschaltvarianten realisieren. Die Vorschaltgruppe ermöglicht hierbei die Übertragung eines Drehmoments zwischen der Eingangswelle und der Nebenwelleneinheit, das Vorgelege die Drehmomentübertragung zwischen der ersten und der zweiten Nebenwelle und die Nachschaltgruppe zwischen der Nebenwelleneinheit und der Ausgangswelle.

Dementsprechend ergibt sich die maximale Anzahl von Gangschaltvarianten aus einer Multiplikation der Anzahl der Zahnradpaare der Vorschaltgruppe, der Anzahl der Zahnradpaare der Nachschaltgruppe und der Anzahl der Schaltzustände des Vorgeleges. Bei zumindest zwei Zahnradpaaren in der Vor- und in der Nachschaltgruppe und zwei Schaltzustände im Vorgelege ergibt sich somit eine maximale Anzahl von acht Gangschaltvarianten. Diese Gangzahl kann jedoch in einfacher Art und Weise erhöht werden, indem weitere Zahnradpaare in der Vorschalt- und/oder in der Nachschaltgruppe ergänzt werden.

Bereits eine Erhöhung von einem weiteren Zahnradpaar führt zu zusätzlichen vier Gangschaltvarianten. Durch geringfügige bauliche Änderungen können daher eine Vielzahl von unterschiedlichen Gangschaltvarianten erreicht werden, sodass das Lastgetriebe je nach Anwendung bzw. je nach Typ der Landmaschine individuell angepasst werden kann. Hierzu kann jedoch üblicherweise das Getriebegehäuse sowie auch die vorhandenen Wellen beibehalten werden, da der zusätzliche Einbau von Zahnradpaaren keine diesbezügliche Änderung erfordert.

Dies ist unter anderem darauf zurückzuführen, dass mit relativ wenig Zahnradpaaren bereits eine hohe Anzahl von Gangschaltvarianten erreicht werden kann und durch diese geringe Anzahl von Zahnradpaaren entsprechend nur wenige Kupplungen vorzusehen sind. Bei einem Lastschaltgetriebe ist für jedes Zahnradpaar der Vorschalt- und der Nachschaltgruppe eine eigene Kupplung vorzusehen. Durch die Verwendung eines Vorgeleges kann die Anzahl der Kupplungen gerade bei hohen Gangschaltvarianten reduziert werden, wobei auch das Vorgelege zumindest zwei Kupplungen erfordert.

Bei einer exemplarischen Ausgestaltung mit 32 Gangschaltvarianten weist sowohl die Vorschalt- als auch die Nachschaltgruppe jeweils vier Zahnradpaare auf. Dementsprechend sind zehn Kupplungen für die Realisierung eines solchen Lastschaltgetriebes notwendig. Sofern auf das Vorgelege verzichtet würde, könnte dieselbe Anzahl von Gangschaltvarianten beispielsweise dadurch erreicht werden, dass für die Vorschaltgruppe 8 und für die Nachschaltgruppe 4 Zahnradpaare vorgesehen sind. Somit wären insgesamt 12 Kupplungen notwendig. Insgesamt kann daher bei einem erfindungsgemäßen Lastschaltgetriebe im Vergleich auf eine Kupplung verzichtet werden. Hierdurch ist es möglich, dass die Baugröße des Lastschaltgetriebes sehr kompakt gehalten werden kann. Außerdem steht innerhalb des Getriebegehäuses ein ausreichender Bauraum zur Verfügung, der eine Erhöhung bzw. eine Verringerung der Zahnradpaare in einfacher Art und Weise ermöglicht.

Die Zahnradpaare weisen jeweils ein Antriebszahnrad und ein Abtriebszahnrad auf, wobei das Drehmoment von dem Antriebszahnrad auf das Abtriebszahnrad übertragen wird. In einer bevorzugten Ausgestaltung sind die Antriebszahnräder der Vorschaltgruppe auf der Eingangswelle und die Abtriebszahnräder der Vorschaltgruppe auf der ersten Nebenwelle angeordnet. Bevorzugt sind dementsprechend die Antriebszahnräder der Nachschaltgruppe auf der zweiten Nebenwelle und die Abtriebszahnräder der Vorschaltgruppe auf der Ausgangswelle angeordnet.

Hierdurch wird deutlich, dass das Vorgelege zwischen der Vorschaltgruppe und der Nachschaltgruppe angeordnet ist. Dies hat den Vorteil, dass die Zahnradpaare der Vorschaltgruppe unabhängig von der Schaltung des Vorgeleges und der Nachschaltgruppe immer in die gleiche Richtung drehen, sodass zwischen der Eingangswelle und der ersten Nebenwelle immer eine optimierte Verzahnung möglich ist. Ferner lassen sich die Zahnräder auf der Eingangswelle und/oder die Zahnräder der ersten Nebenwelle auch in einfacher Art und Weise dazu verwenden, zusätzliche Antriebseinheiten zu betreiben. Bei derartigen Antriebseinheiten kann es sich beispielsweise um Pumpen, Kompressoren oder Wasserpumpen handeln.

Besonders bevorzugt ist eine solche Ausgestaltung dann, wenn eine Reversiereinheit in das Vorgelege integriert ist. Der Sinn dieser Reversiereinheit besteht darin, die Drehrichtung der der Reversiereinheit nachgeschalteten Wellen umzukehren, sodass beispielsweise bei einer Landmaschine eine Rückwärtsfahrt möglich ist. Durch Integration dieser Reversiereinheit in das Vorgelege kann bei einer derartigen Ausgestaltung auf Lastwechsel verzichtet werden. Anstelle einer Reversiereinheit kann alternativ auch ein sogenannter Power-Reverser vorgeschaltet werden.

Für die Ausgestaltung des Vorgeleges haben sich im Rahmen der Erfindung besonders zwei Alternativen als besonders vorteilhaft herausgestellt. Beiden Alternativen ist hierbei gemein, dass das Vorgelege über ein erstes und ein zweites Vorgelege-Zahnradpaar realisiert ist.

Gemäß einer ersten Alternative ist in einem ersten Schaltzustand des Vorgeleges die erste Nebenwelle unmittelbar mit der zweiten Nebenwelle gekoppelt, wobei in einem zweiten Schaltzustand des Vorgeleges die erste Nebenwelle über das erste und das zweite Vorgelege-Zahnradpaar mit der zweiten Nebenwelle in Verbindung steht. Somit erfolgt im ersten Schaltzustand keine Über- bzw. Untersetzung über die beiden Zahnradpaare, sondern die erste Nebenwelle und die zweite Nebenwelle sind unmittelbar über eine Kupplung miteinander verbunden. Die beiden Vorgelege-Zahnradpaare stehen dementsprechend nicht miteinander in Eingriff. Sofern in den zweiten Schaltzustand gewechselt wird, erfolgt über die beiden Vorgelege-Zahnradpaare eine "doppelte" Über- bzw. Untersetzung. Im Falle einer Übersetzung stellt der erste Schaltzustand den hohen Lastzustand Hi und der zweite Schaltzustand den niedrigen Lastzustand Lo dar. Dementsprechend ist im Falle einer Übersetzung der erste Schaltzustand der niedrige Lastzustand Lo und der zweite Schaltzustand der hohe Lastzustand Hi.

Eine solche Ausgestaltung wird üblicherweise auch als Drei-Wellen-Anordnung bezeichnet, da die erste und die zweite Nebenwelle koaxial nebeneinander angeordnet sind, sodass eine direkte Kupplung in einfache Art und Weise möglich ist. Sowohl die erste als auch die zweite Nebenwelle weisen hierbei unabhängig vom Schaltzustand die gleiche Drehrichtung auf. Somit erfolgt eine Umkehr der Drehrichtung einerseits zwischen der Eingangswelle und der Nebenwelle und andererseits zwischen der Nebenwelle und der Ausgangswelle. Entsprechend weisen die Eingangs- und die Ausgangswelle die gleiche Drehrichtung auf.

Gemäß einer zweiten Ausgestaltung kann die Drehrichtung der Ausgangswelle gegenüber der Drehrichtung der Eingangswelle umgekehrt werden. Dies erfolgt dadurch, dass die erste Nebenwelle in einem ersten Schaltzustand des Vorgeleges über das erste Vorgelege-Zahnradpaar und in einem zweiten Schaltzustand des Vorgeleges über das zweite Vorgelege-Zahnradpaar mit der zweiten Nebenwelle in Verbindung steht. Entsprechend erfolgt somit zwischen der ersten und der zweiten Nebenwelle eine Umkehr der Drehrichtung. Eine solche Ausgestaltung wird deshalb auch als Vier-Wellen-Anordnung bezeichnet. Eines der Vorgelege-Zahnradpaare ist hierbei übersetzt und das andere Vorgelege-Zahnradpaar untersetzt. Es ist aber auch möglich, dass ein Vorgelege-Zahnradpaar so ausgestaltet ist, dass weder eine Über- noch eine Untersetzung erfolgen, sodass lediglich die Drehrichtung umgekehrt wird.

Wie zuvor erläutert, weist jedes Zahnradpaar der Vorschalt- und der Nachschaltgruppe eine eigene Kupplung auf. Hinzu kommen zwei zusätzliche Kupplungen für das Vorgelege. Die Ansteuerung dieser Kupplungen erfolgt bevorzugt über eine hydraulische Ansteuerungsanordnung. Ein weiterer Vorteil dieser Erfindung liegt darin, dass die hydraulische Ansteuerungsanordnung unabhängig von der Anzahl der Zahnradpaare bzw. der Gangschaltvarianten stets identisch ist, sodass auch bei einer nachträglichen Anpassung kein Wechsel der hydraulischen Ansteuerungsanordnung erforderlich ist.

Grundsätzlich lässt sich eine Vielzahl von unterschiedlichen Gangschaltvarianten realisieren, wobei bevorzugt die Vorschaltgruppe und/oder die Nachschaltgruppe vier Zahnradpaare aufweisen.

Gegenstand der Erfindung ist auch ein Verfahren zum Durchlaufen eines Lastschaltgetriebes gemäß Patentanspruch 10, wobei das Vorgelege eine erste Schaltebene, die Vorschaltgruppe eine zweite Schaltebene und die Naschaltgruppe eine dritte Schaltebene definiert, wobei jede Schaltebene zumindest zwei Schaltzustände aufweist und wobei die zweite Schaltebene gegenüber der ersten Schaltebene und die dritte Schaltebene gegenüber der zweiten Schaltebene nachgeordnet sind.

Im Folgenden wird die Erfindung anhand eines Ausführungsbeispiels erläutert.

Es zeigen:
- Figur 1: eine schematische Darstellung einer landwirtschaftlichen Arbeitsmaschine,
- Figur 2: ein erfindungsgemäßes Lastschaltgetriebe mit 32 Gangschaltvarianten,
- Figur 3: eine alternative Ausgestaltung des Lastschaltgetriebes gemäß Fig. 2,
- Figur 4: ein bevorzugtes Schaltprinzip des erfindungsgemäßen Lastschaltgetriebes

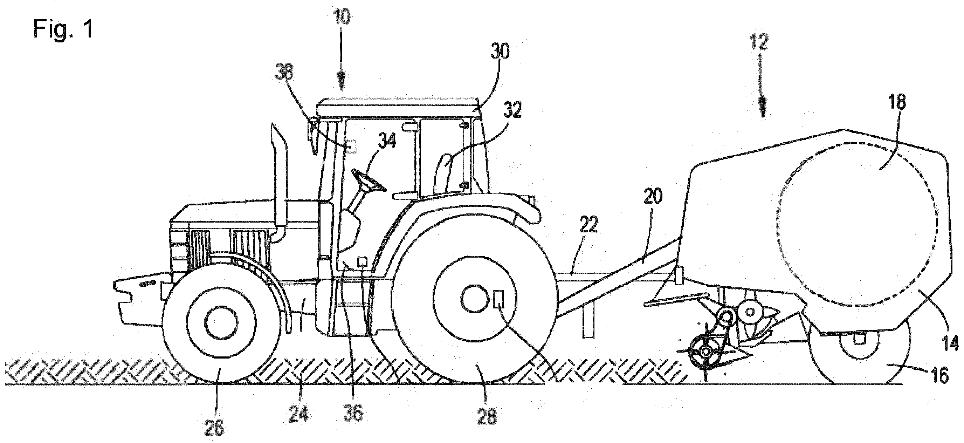

Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

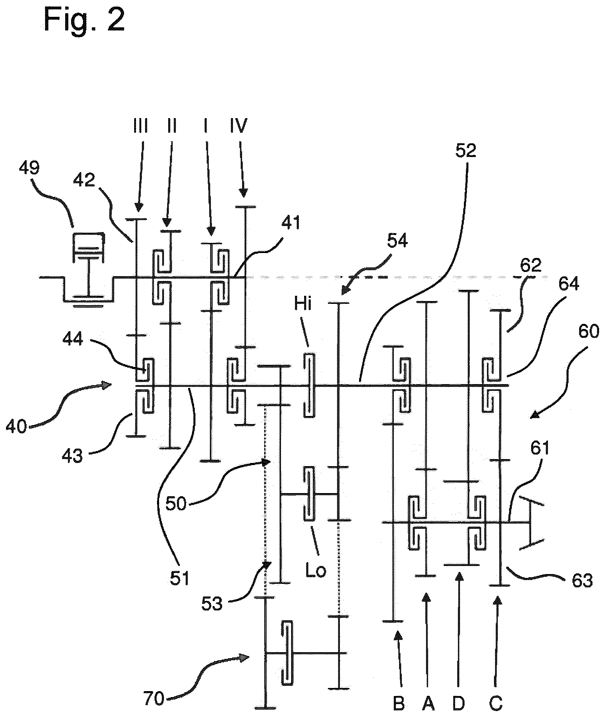

Die Figur 2 zeigt ein schematisches Schaubild des erfindungsgemäßen Lastschaltgetriebes. Das Lastschaltgetriebe weist eine Eingangswelle 41 und eine Ausgangswelle 61 auf, wobei zwischen der Eingangswelle 41 und der Ausgangswelle 61 eine Nebenwelleneinheit bestehend aus einer ersten Nebenwelle 51 und einer zweiten Nebenwelle 52 parallel versetzt angeordnet ist. An der Eingangswelle 41 ist eine Antriebsmaschine 49 vorgesehen, die ein Drehmoment auf die Eingangswelle 41 überträgt. Dieses Drehmoment wird von der Eingangswelle 41 über eine Vorschaltgruppe 40 auf die Nebenwelleneinheit übertragen, wobei wiederum zwischen der Nebenwelleneinheit und der Ausgangswelle 61 eine Drehmomentübertragung über die Nachschaltgruppe 60 erfolgt.

In dem exemplarisch gezeigten Ausführungsbeispiel verfügt die Vorschaltgruppe 40 über insgesamt vier Zahnradpaare I, II, III, IV bestehend jeweils aus einem Antriebszahnrad 42 und einem Abtriebszahnrad 43, die über eine Kupplung 44 miteinander in Eingriff gebracht werden können. Diese vier Zahnradpaare I, II, III, IV zeichnen sich durch unterschiedliche Übersetzungsverhältnisse aus. Beispielsweise weist das Zahnradpaar I ein relativ kleines Antriebszahnrad 42 und ein großes Abtriebszahnrad 43 auf. Sofern diese Zahnräder miteinander in Eingriff stehen, wird die Drehzahl des Abtriebszahnrades 43 verringert und zugleich das Drehmoment erhöht. Im Vergleich dazu weist das Zahnradpaar IV ein größeres Antriebszahnrad 42 und ein kleineres Abtriebszahnrad 43 auf, wodurch die Drehzahl des Abtriebszahnrades 43 erhöht und das Drehmoment verringert wird.

Zur Übertragung des Drehmomentes von der Eingangswelle 41 auf die Nebenwelleneinheit sind die Antriebszahnräder 42 der Vorschaltgruppe 40 auf der Eingangswelle 41 und die Abtriebszahnräder 43 auf der ersten Nebenwelle 51 angeordnet. Jeweils zwei der Kupplungen 44 der Zahnradpaare I, II, III, IV sind hierbei auf der Eingangswelle 41 und die anderen beiden Kupplungen 44 auf der ersten Nebenwelle 51 angeordnet. Hierdurch kann in Richtung der Drehachse der Eingangswelle 41 bzw. der ersten Nebenwelle 51 der Bauraum möglichst kompakt gehalten werden. Es sind jedoch auch Ausgestaltungen möglich, bei denen alle Kupplungen 44 ausschließlich auf der Eingangswelle 41 oder auf der ersten Nebenwelle 51 angeordnet sind.

Zwischen der ersten Nebenwelle 51 und der zweiten Nebenwelle 52 ist ein Vorgelege 50 angeordnet, über das die erste Nebenwelle 51 mit der zweiten Nebenwelle 52 in Verbindung steht. Das Vorgelege 50 weist eine Kupplung Hi auf, über die die erste Nebenwelle 51 unmittelbar mit der zweiten Nebenwelle 52 gekoppelt werden kann. Hierzu sind die beiden Nebenwellen 51, 52 nebeneinander und koaxial zueinander angeordnet, wobei die Kupplung Hi eine unmittelbare Drehmomentübertragung ermöglicht, sodass sowohl das übertragene Drehmoment als auch die Drehzahl nach Einkupplung unverändert bleiben. Eine solche Verbindung stellt einen ersten Schaltzustand des Vorgeleges 50 dar, der einen hohen Lastzustand beschreibt.

In einem zweiten Schaltzustand des Vorgeleges 50 steht die erste Nebenwelle 51 über ein erstes und ein zweites Vorgelege-Zahnradpaar 53, 54 mit der zweiten Nebenwelle 52 in Verbindung. Hierbei kann das Abtriebszahnrad des ersten Vorgelege-Zahnradpaares 53 über eine Kupplung Lo mit dem Antriebszahnrad des zweiten Vorgelege-Zahnradpaares 54 gekoppelt werden. Das Antriebszahnrad des ersten Vorgelege-Zahnradpaares 53 ist hierbei auf der ersten Nebenwelle 51 und das Abtriebszahnrad des zweiten Vorgelege-Zahnradpaares 54 auf der zweiten Nebenwelle 52 angeordnet. Beide Vorgelege-Zahnradpaare 53, 54 sind hierbei derart ausgestaltet, dass eine Übersetzung also eine Reduzierung der Drehzahl und eine Erhöhung des Drehmomentes erfolgt. Der zweite Schaltzustand definiert einen niedrigen Lastzustand.

Unabhängig von dem Schaltzustand des Vorgeleges 50 weisen die Nebenwellen 51, 52 stets die gleiche Drehrichtung auf, die gegenüber der Eingangswelle 41 umgekehrt ist.

Die Übertragung des Drehmomentes von der Nebenwelleneinheit auf die Ausgangswelle 61 erfolgt über eine Nachschaltgruppe 60. Hierzu sind die Antriebszahnräder 62 auf der zweiten Nebenwelle 52 und die Abtriebszahnräder 63 auf der Ausgangswelle 61 angeordnet.

Auch die Nachschaltgruppe 60 verfügt über vier Zahnradpaare A, B, C, D. Die Anzahl der Gangschaltvarianten ergibt sich nunmehr aus einer Multiplikation der Zahnradpaare der Vorschaltgruppe 40, der Nachschaltgruppe 60 und den Schaltzuständen des Vorgeleges 50. Insgesamt sind somit 32 Gänge realisierbar. Durch Entnahme beispielsweise des Zahnradpaares IV und des Zahnradpaares D verringert sich die Anzahl der Gangschaltvarianten auf nur noch 18.

Auch die einzelnen Zahnradpaare A, B, C, D der Nachschaltgruppe 60 sind über jeweils zugeordnete Kupplungen 64 zu- bzw. abkoppelbar, wobei in dem gezeigten Beispiel zwei der Kupplungen 64 auf der zweiten Nebenwelle 52 und die anderen beiden Kupplungen 64 auf der Ausgangswelle 61 angeordnet sind. Auch hier können die Kupplungen 64 ausschließlich auf der zweiten Nebenwelle 52 oder der Ausgangswelle 61 angeordnet sein.

Darüber hinaus verfügt das Lastschaltgetriebe über eine Reversiereinheit 70, die in das Vorgelege 50 integriert ist.

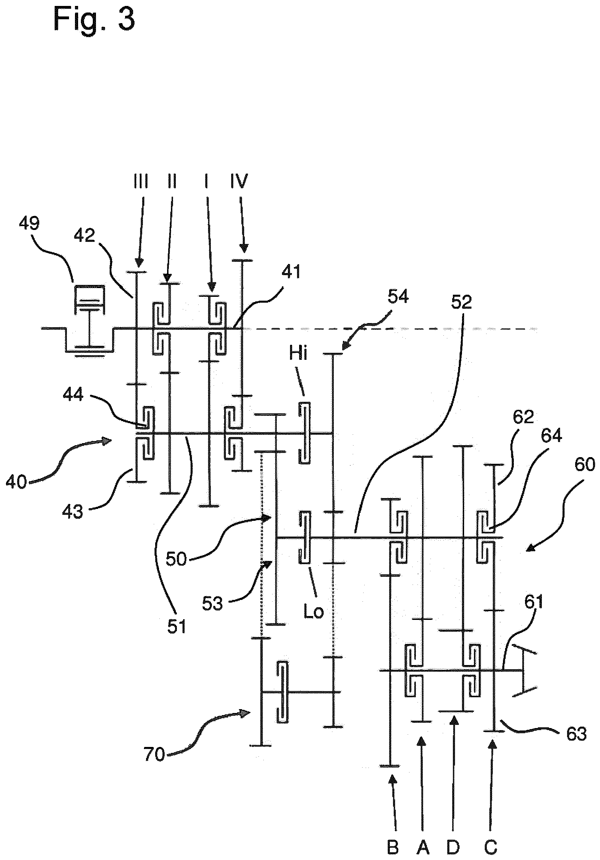

Die Figur 3 zeigt eine alternative Ausgestaltung des Lastschaltgetriebes gemäß der Figur 2, die sich in der Ausgestaltung des Vorgeleges 50 unterscheidet. Im Gegensatz zu der Figur 2 sind die Nebenwellen 51, 52 nicht unmittelbar miteinander koppelbar. Vielmehr wird ein erster Schaltzustand über das erste Vorgelege-Zahnradpaar 53 und ein zweiter Schaltzustand über das zweite Vorgelege-Zahnradpaar 54 realisiert. Das erste Vorgelege-Zahnradpaar 53 kann hierbei über die Kupplung Lo eingekoppelt werden und definiert einen niedrigen Lastzustand, während das zweite Vorgelege-Zahnradpaar 54 über die Kupplung Hi angekoppelt wird und einen hohen Lastzustand definiert. Die übrigen Komponenten sind analog zu dem Lastschaltgetriebe gemäß der Figur 2 ausgebildet. Insbesondere verfügt auch hier die Vorschaltgruppe 40 über vier Zahnradpaare I, II, III, IV und auch die Nachschaltgruppe 60 über vier Zahnradpaare A, B, C, D.

Der wesentliche Unterschied zu dem Lastschaltgetriebe gemäß der Figur 2 besteht darin, dass zwischen der ersten Nebenwelle 51 und der zweiten Nebenwelle 52 eine Umkehr der Drehrichtung erfolgt. Insgesamt erfolgt sowohl über die Vorschaltgruppe 40, als auch über das Vorgelege 50 und die Nachschaltgruppe 60 eine Umkehr der Drehrichtung, sodass die Ausgangswelle 61 eine gegenüber der Eingangswelle 41 umgedrehte Drehrichtung aufweist. Bei einer Ausgestaltung gemäß der Figur 2 weisen die Eingangswelle 41 und die Ausgangswelle 61 die gleiche Drehrichtung auf.

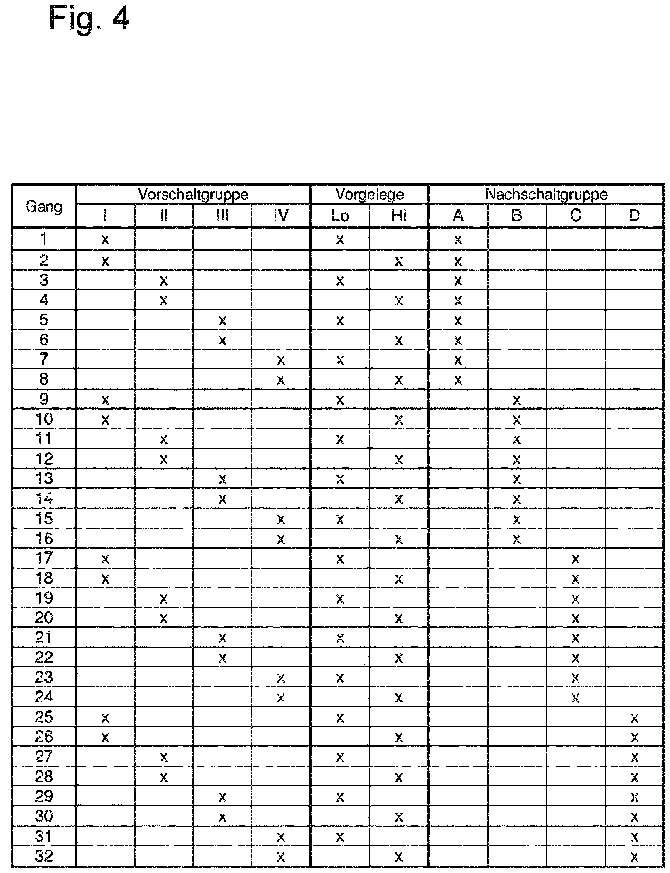

Die Figur 4 zeigt ein bevorzugtes Schaltprinzip des Lastschaltgetriebes. Es wird gezeigt, wie das Lastschaltgetriebe durchlaufen werden soll, um von einer niedrigen Gangschaltvariante möglichst kontinuierlich in eine hohe Gangschaltvariante übergehen zu können. Hierbei bildet das Vorgelege 50 eine erste Schaltebene, die Vorschaltgruppe 40 eine zweite Schaltebene und die Nachschaltgruppe 60 eine dritte Schaltebene.

Zunächst wird die Vorschaltgruppe 40 auf das Zahnradpaar I, das Vorgelege 50 in den Schaltzustand Lo und die Nachschaltgruppe 60 auf das Zahnradpaar A geschaltet. Zur Erhöhung des Ganges wird nunmehr zunächst das Vorgelege 50 in den Schaltzustand Hi gebracht, während sowohl die Vorschaltgruppe 40 als auch die Nachschaltgruppe 60 unverändert bleibt. Zur weiteren Erhöhung wird dieser Vorgang dann bei einer nacheinander geschalteten Erhöhung der Vorschaltgruppe 40 wiederholt, bis alle Zahnradpaare I, II, III, IV der Vorschaltgruppe 40 durchlaufen wurden.

In einem weiteren Schritt werden dann die Zahnradpaare A, B, C, D der Nachschaltgruppe 60 nacheinander durchgeschaltet, wobei für jedes Zahnradpaar A, B, C, D der Nachschaltgruppe 60 das zuvor erläuterte Schaltprinzip wiederholt wird.

## Patentansprüche

1. Lastschaltgetriebe für eine Landmaschine mit einem Getriebegehäuse, einer Eingangswelle (41) und einer Ausgangswelle (61),
wobei sich die Eingangs- und die Ausgangswelle (41, 61) zumindest abschnittsweise innerhalb des Gehäuses erstrecken,
wobei eine Nebenwelleneinheit parallel versetzt zwischen der Eingangs- und der Ausgangswelle (41, 61) angeordnet ist,
wobei die Eingangswelle (41) und die Nebenwelleneinheit über eine Vorschaltgruppe (40) und die Nebenwelleneinheit und die Ausgangswelle (61) über eine Nachschaltgruppe (60) miteinander in Verbindung stehen,
wobei jede Schaltgruppe (40,60) zumindest zwei einzeln hinzu- oder abkoppelbare Zahnradpaare aufweist, und
wobei die Nebenwelleneinheit aus einer ersten und einer zweiten Nebenwelle (51, 52) gebildet ist, die über ein Vorgelege (50) miteinander koppelbar sind.

2. Lastschaltgetriebe nach Anspruch 1, wobei Antriebszahnräder (42) der Vorschaltgruppe (40) auf der Eingangswelle (41) und Abtriebszahnräder (43) der Vorschaltgruppe (40) auf der ersten Nebenwelle (51) angeordnet sind.

3. Lastschaltgetriebe nach Anspruch 1 oder 2, wobei Antriebszahnräder (62) der Nachschaltgruppe (60) auf der zweiten Nebenwelle (52) und Abtriebszahnräder (63) der Nachschaltgruppe (60) auf der Ausgangswelle (61) angeordnet sind.

4. Lastschaltgetriebe nach einem der Ansprüche 1 bis 3, wobei das Vorgelege (50) ein erstes und ein zweites Vorgelege-Zahnradpaar (53, 54) aufweist.

5. Lastschaltgetriebe nach Anspruch 4, wobei in einem ersten Schaltzustand des Vorgeleges (50) die erste Nebenwelle (51) unmittelbar mit der zweiten Nebenwelle (52) gekoppelt ist und in einem zweiten Schaltzustand des Vorgeleges (50) die erste Nebenwelle (51) über das erste und das zweite Vorgelege-Zahnradpaar (53, 54) mit der zweiten Nebenwelle (52) in Verbindung steht.

6. Lastschaltgetriebe nach Anspruch 5, wobei die erste Nebenwelle (51) in einem ersten Schaltzustand des Vorgeleges (50) über das erste Vorlege-Zahnradpaar (53) und in einem zweiten Schaltzustand des Vorgeleges (50) über das zweite Vorlegezahnradpaar (54) mit der zweiten Nebenwelle (52) in Verbindung steht.

7. Lastschaltgetriebe nach einem der Ansprüche 1 bis 6, wobei jedes Zahnradpaar der Vor- und der Nachschaltgruppe (40, 60) eine separat zugeordnete Kupplung (44, 64) aufweist.

8. Lastschaltgetriebe nach einem der Ansprüche 1 bis 7, wobei die Drehrichtung der Ausgangswelle (41) über eine Reversiereinheit (70) umgekehrt werden kann und wobei die Reversiereinheit (70) in das Vorgelege (50) integriert ist.

9. Lastschaltgetriebe nach einem der Ansprüche 1 bis 8, wobei die Vorschaltgruppe (40) und/oder über die Nachschaltgruppe (60) vier Zahnradpaare aufweist.

10. Verfahren zum Durchlaufen eines Lastschaltgetriebes nach einem der Ansprüche 1 bis 9,
wobei das Vorgelege (50) eine erste Schaltebene, die Vorschaltgruppe (40) eine zweite Schaltebene und die Nachschaltgruppe (60) eine dritte Schaltebene definiert,
wobei jede Schaltebene zumindest zwei Schaltzustände aufweist und
wobei die zweite Schaltebene gegenüber der ersten Schaltebene und die dritte Schaltebene gegenüber der zweiten Schaltebene nachgeordnet sind.
